# EUROPÄISCHE PATENTSCHRIFT

(11) **EP 2 999 882 B1**
(45) Veröffentlichungstag und Bekanntmachung des Hinweises auf die Patenterteilung: **17.10.2018**
(21) Anmeldenummer: 14724319.0
(22) Anmeldetag: 15.05.2014
(51) Int. Cl.: F04B 1/107, F04B 1/20, F04B 53/18, F04B 1/30

(54) **AXIALKOLBENPUMPE**
AXIAL PISTON PUMP
POMPE A PISTONS AXIAUX

(30) Priorität: 22.05.2013 DE 102013008679; 22.05.2013 DE 102013008681; 22.05.2013 DE 102013008676; 22.05.2013 DE 102013008629; 22.05.2013 DE 102013008678; 22.05.2013 DE 102013008677
(43) Veröffentlichungstag der Anmeldung: 30.03.2016
(73) Patentinhaber: Hydac Drive Center GmbH, 89129 Langenau (DE)
(72) Erfinder: BOSCH, Ralf, 89177 Börslingen (DE)
(74) Vertreter: Bartels und Partner, Patentanwälte
(86) Internationale Anmeldenummer: PCT/EP2014/001322
(87) Internationale Veröffentlichungsnummer: WO 2014/187545

(56) Entgegenhaltungen:
- EP-A1- 0 320 822
- EP-A1- 0 433 730
- DE-A1-102010 038 651
- DE-A1-102011 101 538
- DE-A1-102011 113 533
- DE-U- 7 515 346

## Beschreibung

Die Erfindung betrifft eine Axialkolbenpumpe in Schrägscheibenbauart, insbesondere für Hydrauliksysteme, mit den Merkmalen im Oberbegriff von Anspruch 1.

Axialkolbenpumpen in Schrägscheibenbauart sind Stand der Technik. Sie finden verbreitet Einsatz für die Druckmittelversorgung von Verbrauchern wie Arbeitszylindern, Hydromotoren und dergleichen. Axialkolbenpumpen der eingangs genannten Gattung, bei denen die Schrägscheibe in ihrer Neigung gegenüber der Achse verstellbar ist, zeichnen sich gegenüber ebenfalls bekannten Axialkolbenpumpen mit feststehender Schrägscheibe durch eine bessere Energiebilanz im Betrieb aus. Während Pumpen mit feststehender Schrägscheibe als Konstantpumpe bei vorgegebener Antriebsdrehzahl stets einen konstanten Volumenstrom des Fluids fördern, auch wenn keine Energie von druckmittelbetätigten Aggregaten angefordert wird und daher auch im Leerlauf die Strömungswiderstände im Hydraulikkreislauf überwunden werden müssen, wofür Antriebsenergie aufgewendet wird, die keine Nutzenergie liefert, ist durch die Verstellmöglichkeit der Schrägscheibenneigung das Fördervolumen auf Null einstellbar und der Bedarf an Antriebsenergie minimierbar. Eine Axialkolbenpumpe der eingangs genannten Art ist in dem Dokument DE 44 15 510 C1 offenbart.

Die DE 25 31 616 A beschreibt eine Axialkolbenmaschine mit den Merkmalen im Oberbegriff von Anspruch 1 mit einem Gehäuse, in dem eine angetriebenen Welle gelagert ist, die drehfest mit einer Zylindertrommel verbunden ist. In der Zylindertrommel sind Kolben axial bewegbar angeordnet, wobei sich die Kolben jeweils mit einem, an einem Betätigungsende angeordneten Gleitschuh an einer Schrägscheibe abstützen. Eine Niederhalteplatte sorgt für die stete Anlage der Gleitschuhe an der Schrägscheibe. Die ebene Schrägscheibe ist Teil einer Wiege, die schwenkbar an einer Lagerschale anliegt. Die Wiege wird durch Steuerung eines Druckmitteldruckes in zwei unterhalb der Wiege angeordnete, sich gegenüberliegende Druckkammern verschwenkt, wodurch eine Einstellung des Hubes der Kolben ermöglicht ist. Zwei in axialer Richtung peripher im Inneren des Gehäuses sich gegenüberliegend angeordnete Stützrohre weisen einen inneren Kanal zur Leitung von Druckmittel in die Druckräume unter der Wiege auf, wobei das jeweilige Stützrohr von einem Tellerfederpacket auf einen, von einer Kugelkappe an einem Abstützteil der Wiege gebildeten Sitz gedrückt wird. Somit ist eine sichere Zu- und Abfuhr von Fluid zu bzw. aus den Druckräumen gewährleistet.

Weitere Axialkolbenmaschinen gehen aus der DE 10 2011 101 538 A1, der DE 75 15 346 U1 und der DE 10 2010 038 651 A1 hervor.

Ausgehend von diesem Stand der Technik stellt sich die Erfindung die Aufgabe, eine Axialkolbenpumpe mit einer in gewünschte Neigungswinkel einstellbaren Schrägscheibe zur Verfügung zu stellen, die sich durch eine besonders hohe Betriebssicherheit, auch im Langzeitbetrieb, auszeichnet.

Gemäß einem Aspekt der Erfindung ist diese Aufgabe gemäß dem Patentanspruch 1 dadurch gelöst, dass für die Schwenkbewegung der Schrägscheibe um eine Schwenkachse eine Seite der Schrägscheibe mit einem Schwenkhebel verbunden ist, der sich parallel zur Achse der Zylindertrommel erstreckt und an seinem einen Ende in senkrecht zu der Achse verlaufender Richtung bewegbar ist, um eine entsprechende Schwenkbewegung der Schrägscheibe um die Schwenkachse zu bewirken.

Es ist ferner eine Zufuhreinrichtung vorgesehen, mittels deren unter Systemdruck stehendes Fluid zumindest zur Schrägscheibenlagerung gelangt. Dadurch steht für die Schrägscheibenlagerung eine Druckschmierung mit dem Fluid wie dem bei Hydrauliksystemen benutzten Hydrauliköl zur Verfügung, das über in der Schrägscheibe ausgebildete Bohrungen und Kanäle entsprechenden, im Betrieb belasteten Bereichen der Lagerung zuführbar ist. Auch bei Langzeitbetrieb mit einer großen Anzahl von Verstellzyklen und/oder mit hoher Frequenz stattfindenden Schwenkbewegungen der Schrägscheibe sind daher eine einwandfreie Lagerung und eine entsprechende hohe Betriebssicherheit gewährleistet.

Wenn die Pumpe betrieben wird, während die Schrägscheibe in eine Schwenkstellung eingestellt ist, bei der ein Volumenstrom und ein entsprechender Systemdruck erzeugt werden, dann wirkt der Systemdruck über die Kolben auf die Schrägscheibe, so dass diese in ihrer Lagerung fixiert ist. Bei drucklosem System, wenn die Pumpe nicht in Betrieb ist oder die Schrägscheibe gegenüber der Achse nicht verschwenkt ist, d.h. in einer Null-Stellung ist und kein Systemdruck vorhanden ist, wirkt über die Kolben auf die Schrägscheibe keine druckbedingte Kraft. Durch die erfindungsgemäß vorgesehene Andrückeinrichtung ist die Schrägscheibe auch bei diesen Betriebssituationen gegen ein Herausfallen aus ihrer Lagerung gesichert, so dass die Pumpe auch bei Einstellung auf Null-Förderung sicher betreibbar ist.

In besonders vorteilhafter Weise kann die Andrückeinrichtung einen Energiespeicher, vorzugsweise in Form einer Federanordnung, zum Erzeugen der die Schrägscheibe an der Schrägscheibenlagerung haltenden Anlagekraft aufweisen.

Bei besonders vorteilhaften Ausführungsbeispielen ist das Rohr mit der Schrägscheibe über eine Schwenkbewegungen derselben relativ zum Rohr ermöglichende und eine Fluidverbindung bildende Gelenkeinrichtung verbunden. Dadurch braucht das Rohr nicht schwenkbeweglich mit dem Pumpengehäuse verbunden zu sein, so dass sich der Anschluss des Rohres am Gehäuse konstruktiv einfach gestaltet.

In besonders vorteilhafter Weise kann zwischen dem von der Schrägscheibe abgewandten Ende des Rohres und einem den Systemdruck führenden Teil des Pumpengehäuses ein Tellerfederpaket angeordnet sein, das als Energiespeicher dient und das Rohr zur Übertragung der Anlagekraft gegen die Gelenkeinrichtung vorspannt, die am Übergang zwischen der Schrägscheibe und dem zugeordneten anderen Ende des Rohres vorgesehen ist.

Die Gelenkeinrichtung kann in der Art eines Kugelgelenks gestaltet sein und einen am Ende des Rohres befindlichen Kugelkopf und ein an der Schrägscheibe befindliches Verbindungsstück aufweisen, in dem eine den Kugelkopf aufnehmende Kugelpfanne gebildet ist, in der ein den Fluidweg des Rohres fortsetzender Fluiddurchgang vorgesehen ist.

Mit besonderem Vorteil kann die Anordnung hierbei so getroffen sein, dass sich das Rohr neben der Zylindertrommel parallel zur Achse erstreckt und dass das Verbindungsstück mit der den Kugelkopf aufnehmenden Kugelpfanne an einem seitlichen Ansatz der Schrägscheibe angeordnet ist.

Nachstehend ist die Erfindung anhand eines in der Zeichnung dargestellten Ausführungsbeispiels im Einzelnen erläutert. Es zeigen:
- Fig. 1: eine schematisch vereinfachte Darstellung, in der von einem Ausführungsbeispiel der erfindungsgemäßen Axialkolbenpumpe in Seitenansicht lediglich die Zylindertrommel, die Schrägscheibe und ein als Zufuhr- und Andrückeinrichtung dienendes Gelenkrohr dargestellt sind;
- Fig. 2: einen Längsschnitt des Ausführungsbeispiels der Axialkolbenpumpe;
- Fig. 3: eine vergrößerte und auseinandergezogene perspektivische Schrägansicht des als Zufuhr- und Andrückeinrichtung dienenden Gelenkrohres; und
- Fig. 4: eine perspektivische Schrägansicht der gesondert dargestellten Schrägscheibe des Ausführungsbeispiels.

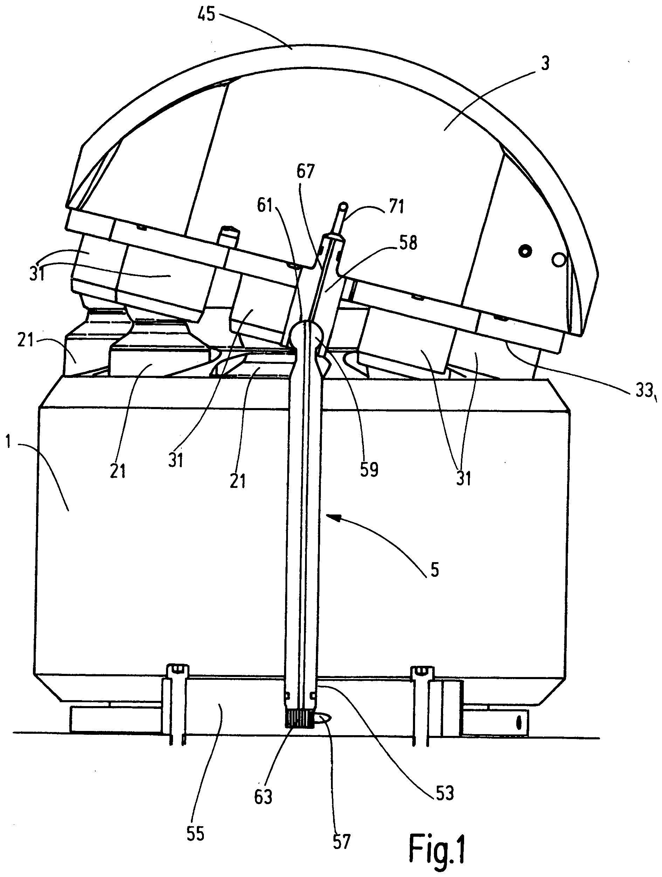

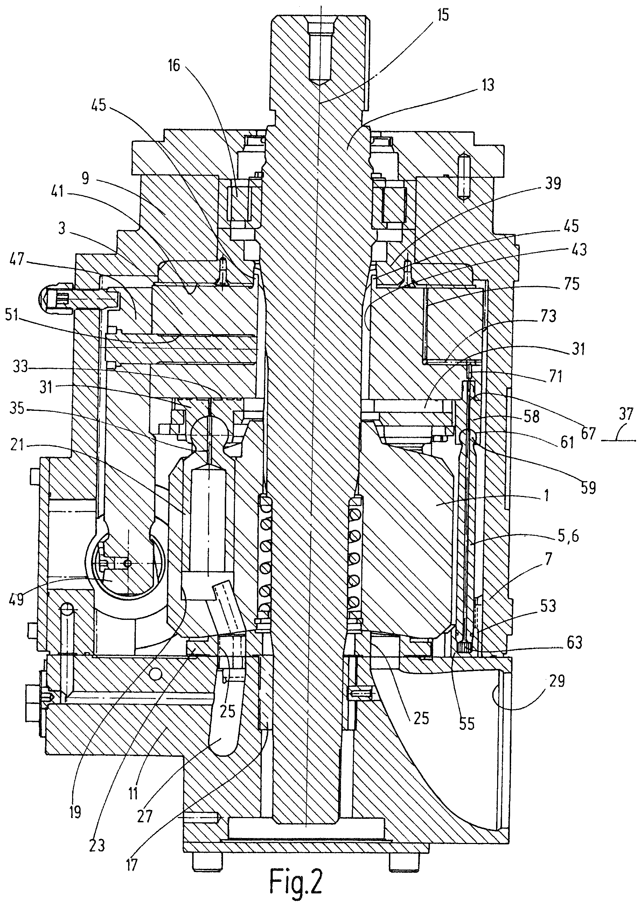

Die Fig. 1 zeigt von dem zu beschreibenden Ausführungsbeispiel in vereinfachter Darstellung lediglich eine rotierende Zylindertrommel 1 mit zugeordneter, schwenkbarer Schrägscheibe 3 und einem neben der Zylindertrommel 1 angeordneten Gelenkrohr 5, das eine Zufuhr- und Andrückeinrichtung 6 bildet. Das in Fig. 2 mit 7 bezeichnete Pumpengehäuse ist in Fig. 1 weggelassen. In dieser Fig. 1 ist die Schrägscheibe 3 in einem Schwenkwinkel dargestellt, der dem maximalen Fördervolumen mit entsprechend hohem Systemdruck entspricht. Wie Fig. 2 zeigt, weist das Pumpengehäuse 7 ein in der Zeichnung oben liegendes Oberteil 9 und ein Unterteil 11 auf. Eine Antriebswelle 13 für die Zylindertrommel 1 ist für die Drehbewegung um die mit 15 bezeichnete Achse im Oberteil 9 in einem Zylinderrollenlager 16 und im unteren Teil 11 mittels eines Gleitlagers 17 gelagert. Die Zylinderräume 19 der Zylindertrommel 1 mit darin geführten Kolben 21 (bei der Schnittebene von Fig. 2 lediglich ein Zylinderraum 19 sichtbar) sind am in der Zeichnung unteren Zylinderende mit einem Steuerring 23 in Kontakt, der am Gehäuseunterteil 11 anliegt und Steueröffnungen 25 aufweist, die Fluideinlässe aus der Saugseite 27 und Auslässe zur Druckseite 29 bilden.

Bei der Drehbewegung der Zylindertrommel 1 gleiten die Kolben 21 über einen Gleitschuh 31 an der Gleitfläche 33, die sich an der Unterseite der Schrägscheibe 3 befindet. Die Gleitschuhe 31 sind mit der Kolbenoberseite kugelgelenkartig verbunden, wobei eine vom jeweiligen Zylinderraum 19 zur Gleitfläche 33 durchgehende Ölbohrung 35 einen Zugang von Fluid wie Hydrauliköl für die Schmierung der Gleitfläche 33 ermöglicht.

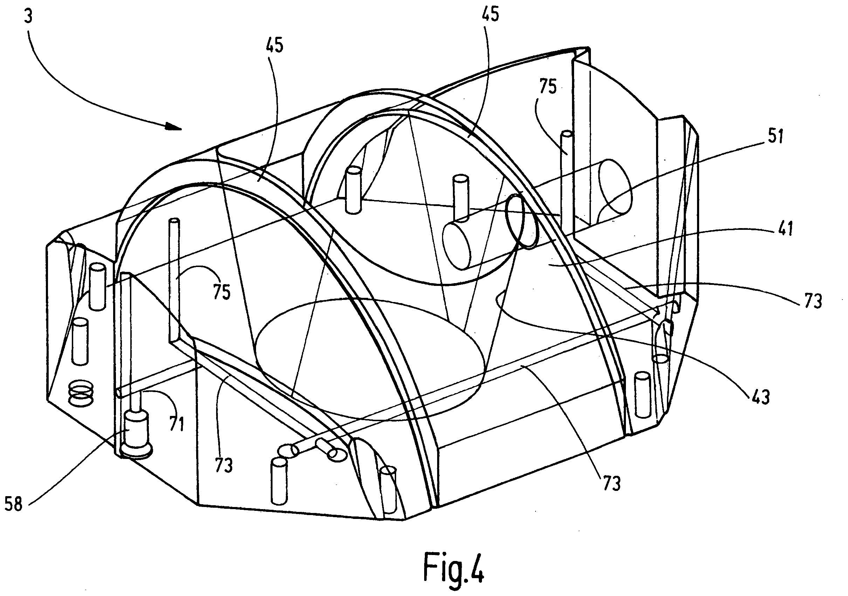

Für die Einstellung des Fördervolumens ist die Schrägscheibe 3 um eine Schwenkachse 37 verstellbar, die in der Ebene der Gleitfläche 33 der Schrägscheibe 3 liegt. Definiert ist diese Schwenkachse 37 durch die zwischen Schrägscheibe 3 und Oberteil 9 gebildete Schrägscheibenlagerung. Diese weist am Oberteil 9 eine Kunststofflagerschale 39 auf, an der die Schrägscheibe 3 mit einer kalottenförmigen Gleitfläche 41 geführt ist. In der Gleitfläche 41 ist für den Durchtritt der Antriebswelle 13 eine sich nach oben konisch erweiternde Durchgangsöffnung 43 in der Schrägscheibe 3 gebildet, siehe besondere Fig. 4. Beidseits neben der Öffnung 43 sind aus der Gleitfläche 41 vorstehende Führungsschienen 45 als Teil der Schrägscheibenlagerung vorgesehen. Für die Schwenkbewegung der Schrägscheibe 3 um die Schwenkachse 37 ist die in Fig. 2 links gelegene Seite der Schrägscheibe 3 mit einem Schwenkhebel 47 verschraubt, der sich parallel zur Achse 15 neben der Zylindertrommel 1 erstreckt und an seinem in Fig. 2 unteren Ende 49 in senkrecht zur Zeichnungsebene verlaufender Richtung bewegbar ist, um eine entsprechende Schwenkbewegung der Schrägscheibe 3 um die Schwenkachse 37 zu bewirken. Der Schwenkhebel 47 ist an der zugeordneten Seite der Schrägscheibe 3 mit einem in einer Bohrung 51 befindlichen Innengewinde verschraubt.

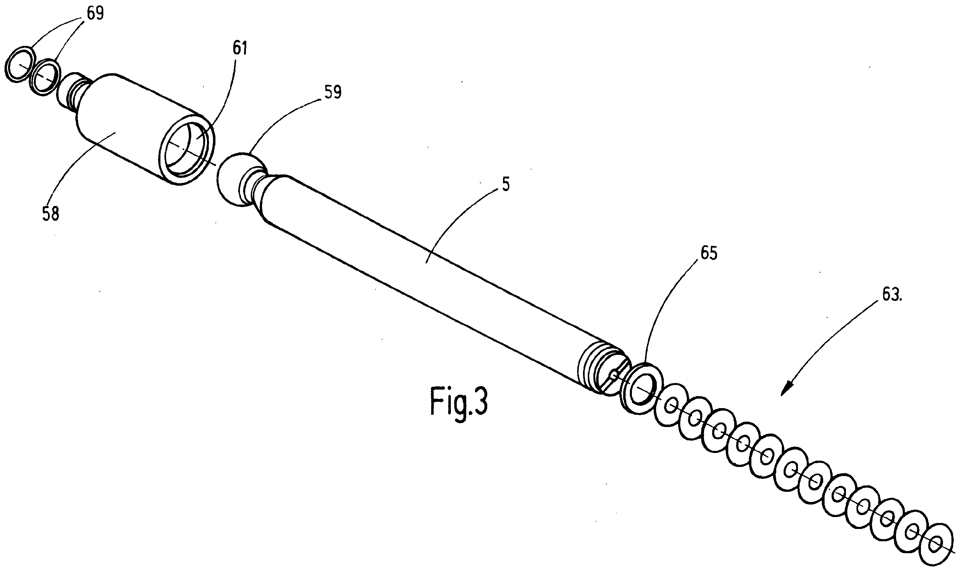

Das Gelenkrohr 5, das mit seinen zugehörigen Bauteilen in Fig. 3 gesondert dargestellt ist und Bestandteil einer Zufuhr- und Andrückeinrichtung 6 bildet, ist, wie Fig. 1 und 2 zeigen, seitlich neben der Zylindertrommel 1 in parallel zur Achse 15 verlaufender Richtung angeordnet. Mit seinem in Fig. 1 und 2 unteren Ende ist das Gelenkrohr 5 in einer Aufnahme 53 (siehe Fig.1) in einem Anschlussblock 55 am Gehäuseunterteil 11 gelagert, wobei die Aufnahme 53 eine Axialverschiebung des Gelenkrohres 5 ermöglicht. Der Block 55 enthält einen zur Druckseite 29 führenden Verbindungskanal 57 (Fig. 1), der in die Aufnahme 53 des Gelenkrohres 5 einmündet. Das obere Ende des Gelenkrohres 5 ist über ein Verbindungsstück 58, das seitlich außerhalb der Gleitfläche 33 an der Unterseite der Schrägscheibe 3 angeordnet ist, mit der Schrägscheibe 3 gelenkig verbunden. Die Gelenkverbindung ist durch eine Art Kugelgelenk realisiert und weist am oberen Ende des Gelenkrohres 5 einen Kugelkopf 59 auf, der in einer Kugelpfanne 61 des Verbindungsstückes 58 aufgenommen ist. Das Gelenkrohr 5 ist über das Verbindungsstück 58 gegen die Schrägscheibe 3 hin verspannt. Zu diesem Zweck ist zwischen dem unteren Ende des Gelenkrohres 5 und dem Boden der Aufnahme 53 ein Tellerfederpaket 63 angeordnet. Ein Dichtring 65 (siehe Fig. 3) bildet eine Abdichtung zwischen der Außenseite des Gelenkrohres 5 und der Aufnahme 53. Ein Fluiddurchgang 67 im Verbindungsstück 58 setzt die Fluidverbindung zur Druckseite 29 über die Rohrmündung am Kugelkopf 59 hinaus zur Schrägscheibe 3 fort. Die Schraubverbindung zwischen Verbindungsstück 58 und Schrägscheibe 3 ist durch Dichtringe 69 (Fig. 3) abgedichtet. An den Durchgang 67 des Verbindungsstückes 58 schließen sich innerhalb der Schrägscheibe 3 ausgebildete Schmierkanäle 71, 73, 75 an, von denen die vertikalen Kanäle 75, siehe Fig. 2 und 4, an für die Schmierstoffzufuhr zur Schwenkscheibenlagerung in Frage kommenden Stellen der Gleitfläche 41 münden. Ein sich durch die Zufuhr von als Schmiermittel dienendes Fluid zur Schwenkscheibenlagerung ergebender Leckvolumenstrom wird aus dem Pumpengehäuse 7 in üblicher Weise über eine Leckölleitung abgeführt, beispielsweise zum Tank.

Wenn die Pumpe bei einer Schwenkstellung der Schrägscheibe in Betrieb ist, bei der ein Volumenstrom gefördert wird und ein Systemdruck erzeugt ist, ist die Schrägscheibe 3 durch den über die Kolben 21 auf die Schrägscheibe 3 wirkenden Systemdruck in der Schrägscheibenlagerung fixiert.

Wenn die Schrägscheibe 3 derart zurückgeschwenkt ist, dass die Pumpe bei Null-Förderung im Leerlauf arbeitet und kein Systemdruck erzeugt ist, oder wenn die Pumpe stillgesetzt ist, dann wirkt keine druckbedingte Kraft auf die Schrägscheibe 3. Bei einer vertikalen Einbaulage der Pumpe besteht somit die Gefahr, dass die Schrägscheibe 3 aus der Schrägscheibenlagerung herausfallen kann. Bei der Erfindung ist diese Gefahr dadurch vermieden, dass das Gelenkrohr 5, zusätzlich zur Funktion der Schmierstoffversorgung der Schrägscheibenlagerung, mittels der durch das Tellerfederpaket 63 erzeugten Vorspannung eine Andrückeinrichtung 6 bildet, die die Schrägscheibe 3 unter einer Anlagekraft an der Schwenklagerung sichert.

## Patentansprüche

1. Axialkolbenpumpe in Schrägscheibenbauart, insbesondere für Hydrauliksysteme, mit einer in einem Pumpengehäuse (7) um eine Achse (15) rotierend antreibbaren Zylindertrommel (1), in der Kolben (21) axial bewegbar angeordnet sind, die sich mit ihrem außerhalb der Zylindertrommel (1) zugänglichen Betätigungsende (31) an einer Schrägscheibe (3) zumindest mittelbar abstützen, die zur Einstellung des Hubes der Kolben (21) und damit des durch diese erzeugten Fluid-Systemdrucks in gewünschte Neigungswinkel relativ zur Achse (15) schwenkbar ist, wobei die Schrägscheibe (3) für ihre Schwenkbewegungen über eine Schrägscheibenlagerung (39, 41) am Pumpengehäuse (7) gelagert ist, wobei eine Zufuhreinrichtung (6) vorgesehen ist, mittels deren unter Systemdruck stehendes Fluid zumindest zur Schrägscheibenlagerung (39, 41) gelangt, wobei eine die Schrägscheibe (3) in Anlage an der Schrägscheibenlagerung (39, 41) haltende Andrückeinrichtung (6) vorgesehen ist, wobei die Zufuhreinrichtung einen Bestandteil der Andrückeinrichtung (6) bildet und ein Rohr (5) aufweist, das eine Fluidverbindung zwischen einem den Systemdruck führenden Fluidpfad (57) des Pumpengehäuses (7) und der Schrägscheibe (3) bildet und eine diese an der Schrägscheibenlagerung (39, 41) haltende Anlage-kraft auf die Schrägscheibe (3) überträgt, wobei sich das Rohr (5) neben der Zylindertrommel (1) parallel zur Achse (15) erstreckt, und wobei ein Verbindungsstück (58) mit der einen Kugelkopf (59) aufnehmenden Kugelpfanne (61) an einem seitlich der Gleitfläche (33) gelegenen Teil der Schrägscheibe (3) angeordnet ist, **dadurch gekennzeichnet, dass** für die Schwenkbewegung der Schrägscheibe (3) um eine Schwenkachse (37) eine Seite der Schrägscheibe (3) mit einem Schwenkhebel (37) verbunden ist, der sich parallel zur Achse (15) der Zylindertrommel (1) erstreckt und an seinem einen Ende (49) in senkrecht zu der Achse (15) verlaufender Richtung bewegbar ist, um eine entsprechende Schwenkbewegung der Schrägscheibe (3) um die Schwenkachse (37) zu bewirken.

2. Axialkolbenpumpe nach Anspruch 1, **dadurch gekennzeichnet, dass** die Andrückeinrichtung (6) einen Energiespeicher, vorzugsweise in Form einer Federanordnung (63), zum Erzeugen der die Schrägscheibe (3) an der Schrägscheibenlagerung (39, 41) haltenden Anlagekraft aufweist.

3. Axialkolbenpumpe nach Anspruch 1 oder 2, **dadurch gekennzeichnet, dass** das Rohr (5) mit der Schräg-scheibe (3) über eine Schwenkbewegungen derselben relativ zum Rohr (5) ermöglichende und eine Fluidverbindung bildende Gelenk-einrichtung (59, 61) verbunden ist.

4. Axialkolbenpumpe nach Anspruch 3, **dadurch gekennzeichnet, dass** zwischen dem von der Schrägscheibe (3) abgewandten Ende des Rohres (5) und einem den Systemdruck führenden Teil (55) des Pumpengehäuses (7) ein Tellerfederpaket (63) angeordnet ist, das das Rohr (5) zur Übertragung der Anlagekraft gegen die Gelenkeinrichtung (59, 61) vorspannt, die am Übergang zwischen der Schrägscheibe (3) und dem zugeordneten anderen Ende des Rohres (5) vorgesehen ist.

5. Axialkolbenpumpe nach Anspruch 3 oder 4, **dadurch gekennzeichnet, dass** die Gelenkeinrichtung in der Art eines Kugelgelenkes gestaltet ist und einen am Ende des Rohres (5) befindlichen Kugelkopf (59) und ein an der Schrägscheibe (3) befindliches Verbindungsstück (58) aufweist, in dem eine den Kugelkopf (59) aufnehmende Kugelpfanne (61) ausgebildet ist, in der ein den Fluidweg des Rohres (5) fortsetzender Fluiddurchgang (67) vorgesehen ist.

## Claims

1. An axial piston pump in swash-plate type construction, in particular for hydraulic systems, with a cylinder drum (1) which can be rotationally driven about an axis (15) in a pump housing (7), in which drum pistons (21) are arranged axially movable, which pistons abut a swash plate (3), at least indirectly, with the actuation end (31) thereof which is accessible from the outside of the cylinder drum (1) which can be pivoted, to adjust the stroke of the piston (21) and thus the fluid system pressure generated thereby, into desired angles of inclination relative to the axis (15), wherein the swash plate (3) is housed via a swash-plate bearing (39, 41) at the pump housing (7) for its pivoting movements, wherein a supply device (6) is provided, by means of which system-pressurised fluid reaches at least the swash-plate bearing (39, 41), wherein a pressing device (6) is provided, maintaining the swash plate (3) against the swash-plate bearing (39, 41), wherein the supply device forms a component of the pressing device (6) and has a tube (5) which forms a fluidic connection between a fluid path (57) of the pump housing (7) conducting the system pressure and the swash plate and transfers a contact force to the swash plate (3) which holds this to the swash-plate bearing (39, 41), wherein the tube (5) extends parallel to the axis (15) adjacent to the cylinder drum (1), and wherein a connecting piece (58) is arranged with the ball socket (61) receiving the spherical head (59) at a part of the swash plate (3) laid on the side of the sliding surface (33), **characterised in that** a side of the swash plate (3) is connected to a pivoting lever (37) for pivoting movement of the swash plate (3) about a pivot axis (37), extending parallel to the axis (15) of the cylinder drum (1) and movable at its one end (49) in direction running perpendicular to the axis (15), in order to bring about a corresponding pivot movement of the swash plate (3) about the pivot axis (37).

2. The axial piston pump according to claim 1, **characterised in that** the pressing device (6) has an energy store, preferably in the form of a spring arrangement (63) for generating the contact force holding the swash plate (3) on the swash-plate bearing (39, 41).

3. The axial piston pump according to claim 1 or 2, **characterised in that** the tube (5) is connected to the swash plate (3) via a hinging device (59, 61) making possible pivoting movements of same relative to the tube (5) and forming a fluidic connection.

4. The axial piston pump according to claim 3, **characterised in that** a disc spring pack (63) is arranged between the end of the tube (5) facing away from the swash plate (3) and a part (55) of the pump housing (7) conducting the system pressure, which disc spring pack pretensions the tube (5) for transmitting the contact force against the hinging device (59, 61) which is provided at the transition between the swash plate (3) and the associated, other end of the tube (5).

5. The axial piston pump according to claim 3 or 4, **characterised in that** the hinging device is designed in the manner of a ball-and-socket joint and has a spherical head (59) located at the end of the tube (5) and a connecting piece (58) located at the swash plate (3) in which connecting piece there is designed a ball socket (61) receiving the spherical head (50) in which there is provided a fluid path (67) continuing the fluid path of the tube (5).

## Revendications

1. Pompe à pistons axiaux du type de construction à disque oblique, notamment pour des systèmes hydrauliques, comprenant un tambour (1) cylindrique, qui peut être entraîné en rotation autour d'un axe (15), dans un corps (7) de pompe, dans laquelle des pistons (21) sont montés mobiles axialement, pistons qui s'appuient, au moins indirectement, sur un disque (3) oblique par leur extrémité (31) d'actionnement accessible de l'extérieur du tambour (1) cylindrique, disque qui, pour le réglage de la course des pistons (21) et ainsi de la pression du système de fluide obtenue par ceux-ci, peut pivoter par rapport à l'axe (15) à l'angle d'inclinaison souhaité, dans laquelle le disque (3) oblique est, pour ses mouvements de pivotement, monté sur le corps (7) de la pompe par un palier (39, 41) de disque oblique, dans laquelle il est prévu un dispositif (6) d'apport au moyen duquel du fluide sous une pression de système parvient au moins au palier (39, 41) de disque oblique, dans laquelle il est prévu un dispositif (6) de poussée maintenant le disque (3) oblique en contact avec le palier (39, 41) de disque oblique, dans laquelle le dispositif d'apport forme une partie constitutive du dispositif (6) de poussée et a un tuyau (5), qui forme une liaison fluidique entre un chemin (57) de fluide, conduisant la pression du système, du corps (7) de pompe et le disque (3) oblique et transmet au disque (3) oblique une force d'application maintenant celui-ci sur le palier (39, 41) de disque oblique, dans laquelle le tuyau (5) s'étend à côté du tambour (1) cylindrique, parallèlement à l'axe (15) et dans laquelle une pièce (58) de liaison est disposée avec le coussinet (61) sphérique recevant la tête (59) sphérique sur une partie, mise latéralement à la surface (33) de glissement, du disque (3) oblique, **caractérisée en ce que**, pour le mouvement de pivotement du disque (3) oblique autour d'un axe (37) de pivotement, une face du disque (3) oblique est reliée à un levier (37) de pivotement, qui s'étend parallèlement à l'axe (15) du tambour (1) cylindrique et qui est mobile à l'une de ses extrémités (49) dans une direction s'étendant perpendiculairement à l'axe (15) pour provoquer un mouvement de pivotement correspondant du disque (3) oblique autour de l'axe (37) de pivotement.

2. Pompe à pistons axiaux suivant la revendication 1, **caractérisée en ce que** le dispositif (6) d'application d'une pression a un accumulateur d'énergie, de préférence sous la forme d'un agencement (63) de ressort, pour produire la force d'application maintenant le disque (3) oblique sur le palier (39, 41) de disque oblique.

3. Pompe à pistons axiaux suivant la revendication 1 ou 2, **caractérisée en ce que** le tuyau (5) est relié au disque (3) oblique par un dispositif (59, 61) d'articulation permettant des mouvements de pivotement de celui-ci par rapport au tuyau (5) et formant une liaison fluidique.

4. Pompe à pistons axiaux suivant la revendication 3, **caractérisée en ce qu'**entre l'extrémité, loin du disque (3) oblique, du tuyau (5) et une partie (55), conduisant la pression du système, du corps (7) de la pompe, est monté un paquet de ressorts (63) à disque, qui met, pour la transmission de la force d'application, le tuyau (5) sous précontrainte contre le dispositif (59, 61) d'articulation, lequel est prévu à la transition entre le disque (3) oblique et l'autre extrémité associée du tuyau (5).

5. Pompe à pistons axiaux suivant la revendication 3 ou 4, **caractérisée en ce que** le dispositif d'articulation est conformé à la manière d'une rotule et a une tête (59) sphérique se trouvant à une extrémité du tuyau (5) et une pièce (58) de liaison se trouvant sur le disque (3) oblique, pièce de liaison dans laquelle est constitué un coussinet (61) sphérique, qui reçoit la tête (59) sphérique et dans lequel est prévu un passage (67) pour du fluide prolongeant le trajet pour du fluide du tuyau (5).
